# EUROPEAN PATENT APPLICATION

(11) **EP 1 408 133 A1**
(43) Date of publication of application: **14.04.2004**
(21) Application number: 02769582.4
(22) Date of filing: 13.05.2002
(51) Int. Cl.: C23C 4/04

(54) **MEMBER COATED WITH THERMAL BARRIER COATING FILM AND THERMAL SPRAYING POWDER**

(30) Priority: 15.05.2001 JP 2001145611
(71) Applicant: Tohoku Techno Arch Co., Ltd., Sendai-shi, Miyagi 980-0845 (JP)
(72) Inventor: OGAWA, Kazuhiro, Sendai-shi, Miyagi 981-1106 (JP); SHOJI, Tetsuo, Sendai-shi, Miyagi 981-0967 (JP); KATO, Toshiki, Sendai-shi, Miyagi 980-0871 (JP)
(74) Representative: Weber, Dieter, Dr.
(86) International application number: PCT/JP2002/004621
(87) International publication number: WO 2002/092874

(57) **Abstract**

The present invention provides a member coated with thermal barrier coating film having a metal substrate, the surface of which is covered with an adhesive layer (bond coat layer) composed of a heat resisting alloy and a thermal barrier film layer (thermal barrier coating layer) composed of a heat resisting ceramic formed on the adhesive layer, and a thermal spraying powder used for the formation of the adhesive layer, characterized in that the adhesive layer is a MCrAlX alloy (wherein M is at least one metal selected from among Fe, Ni and Co, and X is at least one metal selected from among Y, Hf, Ta, Cs, Pt Zr, La and Th), and an element capable of inhibiting the growth of an oxide layer (TGO) which is grown between the adhesive layer and the thermal barrier film layer by the exposure to a high temperature is added to the adhesive layer.

## Description

### BACKGROUND OF THE INVENTION

### Field of the Invention

The present invention relates to improvements in a thermal barrier film (coating film) formed on the surface of a high-temperature exposed member exposed to an extremely high temperature such as a gas turbine for power plant or a turbine blade for jet engine and, particularly, to a member coated with thermal barrier coating film having a thermal barrier film (coating film) capable of significantly reducing the exfoliation of the thermal barrier film (coating layer) by the exposure to a high temperature, and a thermal spraying powder used for the formation of an adhesive layer (bond coat layer) provided between the thermal barrier film (coating film) and a substrate alloy.

### Description of the Related Art

In recent years, global environmental problems such as global warming, acid rain and ozone depletion have come to the fore worldwide, and there is an urgent need to reduce the amount of a greenhouse gas such as COₓ or NOₓ that is the main cause. Particularly, since the gas exhausted from energy conversion equipment such as a boiler or gas turbine for thermal power plant and a jet engine occupies the essential part of the greenhouse gas, attempts to improve the thermal efficiency by high temperature and high pressure or the like to suppress the greenhouse gas have been actively progressed in a global scale.

In a gas turbine for power generation in a thermal power plant, for example, development of a plant targeted for a thermal efficiency of 50% has been vigorously progressed by raising the inflow gas temperature from 1300°C that is in a conventional existing plant to 1500°C.

Such an improvement in thermal efficiency also results in the imposition of a sever increase in thermal load to components, which exceeds the durability limit only by the combination of a conventional cooling technique with a Ni-group super alloy. Therefore, the application of a m ember coated with thermal barrier coating film the surface of which is covered with a thermal barrier coating (TBC) composed of a ceramic excellent in heat resistance and having a small heat conductivity is essential.

The heat resisting alloy as Ni-group super alloy on which such a thermal barrier coating (TBC) is formed is required to have high mechanical strength under the using environment and be excellent in high-temperature oxidation resistance and high-temperature corrosion resistance. However, since the high-temperature strength is given most priority as its characteristic, and the addition ratio of a metal element that is useless for improvement in strength tends to be inevitably suppressed low, such an alloy is generally poor in oxidation resistance or high-temperature corrosion resistance.

From the point of compensating the oxidation resistance or high-temperature corrosion resistance and improving the adhesion with the thermal barrier coating (TBC), generally, an adhesive layer (bond coat layer) represented by an MCrAlX alloy which exerts excellent oxidation resistance (wherein M is at least one metal selected from Fe, Ni and Co, and X is at least one metal selected from Y, Hf, Ta, Cs, Pt, Zr, La and Th) is formed on the surface of the heat resisting alloy such as Ni-group super alloy, and the thermal barrier coating (TBC) is then formed on the adhesive layer (bond coat layer).

Although the member coated with thermal barrier coating film having the thermal barrier coating layer (TBC) formed on the adhesive layer (bond coat layer) shows excellent heat resisting characteristic, there is a problem that these components lose the thermal barrier effect by the exfoliation of the thermal barrier coating (TBC) layer when used for a long period, because they are used under an extreme environment with very high temperature and high pressure. To solve this exfoliation, it is attempted to add CaO and SiO₂ to the thermal barrier coating layer (TBC) to preliminarily generate minute cracks, thereby dispersing a thermal stress to prevent the exfoliation of the thermal barrier coating layer (TBC) (e.g., Japanese Patent Application Laid-Open No. H04-36454). This technique could sufficiently attain the purpose in the using temperature range (1100-1300°C) of gas turbine at the time of its filing, but is still insufficient for the current using environment, particularly, where the operating temperature exceeds 1500°C as described above, causing the exfoliation.

In view of the problems noted above, the present invention provides a highly durable member coated with thermal barrier coating film which never causes the exfoliation of the thermal barrier coating layer (TBC) even by the long-term exposure to a high temperature, and a thermal spraying powder for forming the adhesive layer (bond coat layer).

### SUMMARY OF THE INVENTION

To solve the problems noted above, the member coated with thermal barrier coating film of the present invention has a metal substrate, the surface of which is covered with an adhesive layer (bond coat layer) composed of a heat resisting alloy and a thermal barrier film layer (thermal barrier coating layer) composed of a heat resisting ceramic formed on the adhesive layer (bond coat layer), and it is characterized in that the adhesive layer (bond coat layer) comprises a MCrAlX alloy (wherein M is at least one metal selected from among Fe, Ni and Co, and X is at least one metal selected from among Y, Hf, Ta, Cs, Pt, Zr, La and Th), and an element capable of inhibiting the growth of an oxide layer developed between the adhesive layer (bond coat layer) and the thermal barrier film layer (thermal barrier coating layer) by the exposure to a high temperature is added to the adhesive layer (bond coat layer).

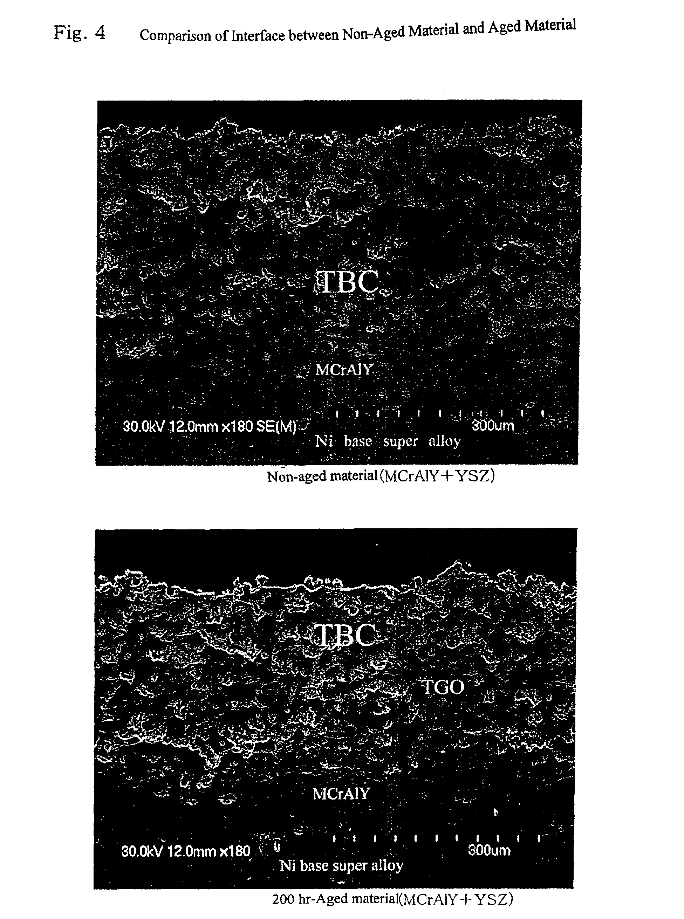

The cause of exfoliation of the thermal barrier film layer (thermal barrier coating layer) is resulted from that a thermally growing oxide (TGO) is generated by the long-term exposure to high temperature in the interface between the adhesive layer (bond coat layer) and the thermal barrier film layer (thermal barrier coating layer) as shown in Fig. 4, and minute cracks are generated by the thermal stress resulted from the inconsistency of thermal expansion between the thermal barrier film layer (thermal barrier coating layer) and the thermally developed oxide (TGO). Therefore, by adding an element capable of inhibiting the growth of the thermally developing oxide (TGO) to the adhesive layer (bond coat layer), the growth of the thermally growing oxide (TGO) can be suppressed, and the exfoliation of the thermal barrier film layer (thermal barrier coating layer) by the long-term exposure to high temperature can be consequently significantly reduced or eliminated.

In the member coated with thermal barrier coating film of the present invention, the added element is preferably at least one of Ce and Si.

Ce and Si not only are relatively easily available, but also can effectively suppress the growth of the thermally developing oxide (TGO) with a relatively small addition amount.

In the member coated with thermal barrier coating film of the present invention, the adhesive layer (bond coat layer) preferably contains both Ce and Si.

By using the both, a further high effect of suppressing the growth of the thermally developing oxide (TGO) can be obtained, compared with the single use thereof.

In the member coated with thermal barrier coating film of the present invention, the adhesive layer (bond coat layer) preferably has a composition of 37Co-32Ni-21Cr-8Al-0.5Y-0.5Ce-1Si alloy (wherein the numerical value in the front of each atomic symbol shows wt% of each element).

Since the 38.5Co-32Ni-21Cr-8Al-0.5Y alloy to which cerium and silicon of additive elements are added is produced relatively much as a commercially available commodity, the thermal barrier film-coated member of the present invention can be provided at a low cost by using raw materials and production facilities therefor.

The thermal spraying powder of the present invention is a thermal spraying powder used for the formation of the adhesive layer (bond coat layer) of a member coated with thermal barrier coating film having a metal substrate, the surface of which is covered with the adhesive layer (bond coat layer) composed of a heat resisting alloy having a composition MCrAlX (wherein M is at least one metal selected from Fe, Ni, and Co, and X is at least one metal selected from Y, Hf, Ta, Cs, Pt, Zr, La and Th) and a thermal barrier film layer (thermal barrier coating layer) composed of a heat resisting ceramic formed on the adhesive layer (bond coat layer), and it is characterized in that an element capable of inhibiting the growth of an oxide layer which is grown between the adhesive layer (bond coat layer) and the thermal barrier film layer (thermal barrier coating layer) by the exposure to a high temperature is added to the composition of the adhesive layer (bond coat layer).

According to this characteristic, since the cause of the exfoliation of the thermal barrier film layer (thermal barrier coating layer) is resulted from, as shown in Fig. 4, that a thermally growing oxide (TGO) is generated in the interface between the adhesive layer (bond coat layer) and the thermal barrier film layer (thermal barrier coating layer) by the long-term exposure to high temperature, and minute cracks are generated by the thermal stress caused by the inconsistency of thermal expansion between the thermal barrier film layer (thermal barrier coating layer) and the thermally growing oxide (TGO), the growth of the thermally growing oxide (TGO) can be suppressed by adding the element capable of inhibiting the growth of the thermally growing oxide (TGO) to the adhesive layer (bond coat layer), and the exfoliation of the thermal barrier film layer (thermal barrier coating layer) by the long-term exposure to high temperature can be consequently significantly reduced or eliminated.

In the thermal spraying powder of the present invention, the added element is at least one of Ce and Si.

According to this, Ce and Si not only are relatively easily available, but also can effectively suppress the growth of the thermally growing oxide (TGO) with a relatively small addition amount.

The thermal spraying powder of the present invention preferably contains both Ce and Si in the composition.

By using the both, a further high effect of suppressing the growth of the thermal growing oxide (TGO) can be obtained, compared with the single use thereof.

The thermal spraying powder of the present invention preferably has a composition of 37Co-32Ni-21Cr-8Al-0.5Y-0.5Ce-1Si alloy (wherein the numerical value in the front of each atomic symbol shows wt% of each element).

Since the 38.5Co-32Ni-21Cr-8Al-0.5Y alloy to which cerium and silicon of additive elements are added is produced relatively much as a commercially available commodity, the thermal spraying powder of the present invention can be provided at a low cost by using raw materials and production facilities therefor.

### BRIEF DESCRIPTION OF THE DRAWINGS

Fig. 1 is a flow chart showing the production process of a thermal spraying powder used in working examples of the present invention;
Fig. 2 schematically illustrates thermal spraying equipment used in the working examples of the present invention;
Fig. 3 illustrates the process of a four-point bending test used in the working examples of the present invention;
Figs. 4 are sectional SEM images comparatively showing the interfaces of a non-aged material (before thermal exposure) and an aged material (exposed material) in a conventional member coated with thermal barrier coating film (MCrAlY+YSZ);
Figs. 5 are sectional SEM images of combined samples MCrAlY+YSZ and MCrAlY+CYSZ in the working examples of the present invention;
Figs. 6 are sectional SEM images of combined samples MCrAlYCeSi+YSZ and MCrAlYCeSi+CYSZ in the working examples of the present invention;
Figs. 7 are sectional SEM images and EDX images in no aging of the combined sample MCrAlY+YSZ in the working examples of the present invention;
Figs. 8 are sectional SEM images and EDX images in no aging of the combined sample MCrAlY+CYSZ in the working examples of the present invention;
Figs. 9 are sectional SEM images and EDX images in no aging of the combined sample MCrAlYCeSi+YSZ in the working examples of the present invention;
Figs. 10 are sectional SEM images and EDX images in no aging of the combined sample MCrAlYCeSi+CYSZ in the working examples of the present invention;
Figs. 11 are sectional SEM images and EDX images after the lapse of 1100°C × 50 hr of the combined sample MCrAlY+YSZ in the working examples of the present invention;
Figs. 12 are sectional SEM images and EDX images after the lapse of 1100°C × 50 hr of the combined sample MCrAlY+CYSZ in the working examples of the present invention;
Figs. 13 are sectional SEM images and EDX images after the lapse of 1100°C × 50 hr of the combined sample MCrAlYCeSi+YSZ of the working examples of the present invention;
Figs. 14 are sectional SEM images and EDX images after the lapse of 1100°C × 50 hr of the combined sample MCrAlYCeSi+CYSZ in the working examples of the present invention;
Figs. 15 are sectional SEM images and EDX images after the lapse of 1100°C × 500 hr of the combined sample MCrAlY+YSZ in the working examples of the present invention;
Figs. 16 are sectional SEM images and EDX images after the lapse of 1100°C × 500 hr of the combined sample MCrAlY+CYSZ in the working examples of the present invention;
Figs. 17 are sectional SEM images and EDX images after the lapse of 1100°C × 500 hr of the combined sample MCrAlYCeSi+YSZ in the working examples of the present invention;
Figs. 18 are sectional SEM images and EDX images after the lapse of 1100°C × 500 hr of the combined sample MCrAlYCeSi+CYSZ in the working examples of the present invention;
Figs. 19 are sectional SEM images showing the result of four-point bending test for each combined specimen in no aging;
Figs. 20 are sectional SEM images showing the result of four-point bending test for each combined specimen after the lapse of 1100°C × 100 hr;
Figs. 21 are sectional SEM images showing the result of four-point bending test for each combined specimen after the lapse of 1100°C × 200 hr;
Figs. 22 are sectional SEM images showing the result of four-point bending test for each combined specimen after the lapse of 1200°C × 100 hr; and
Fig. 23 is a table showing the result of four-point bending test for each combined specimen.

### DESCRIPTION OF THE PREFERRED EMBODIMENTS

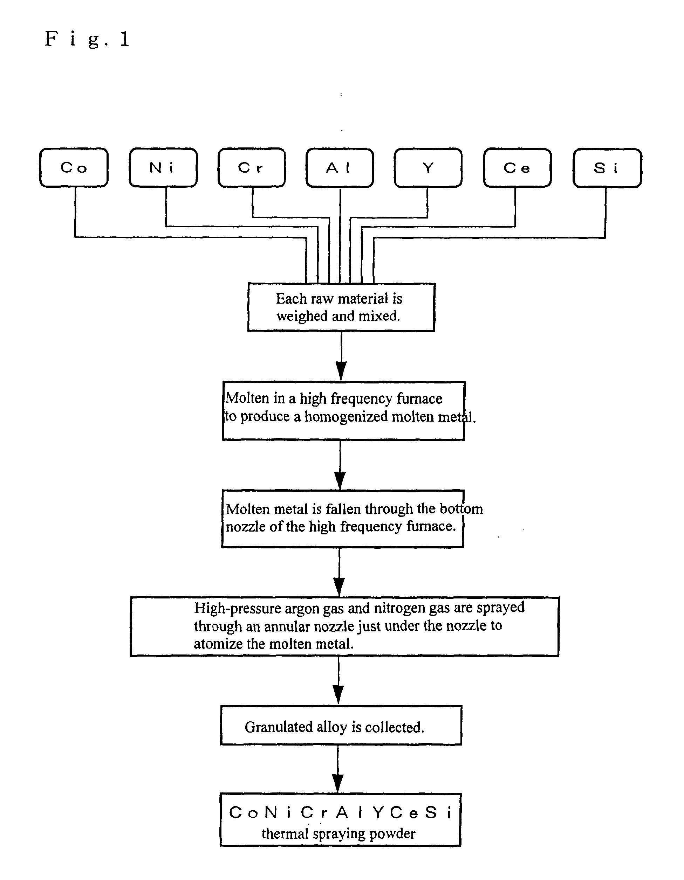

Embodiments of the present invention will next be described in reference to the drawings. Fig. 1 is a flow chart showing the production method of a thermal spraying powder of 37Co-32Ni-21Cr-8Al-0.5Y-0.5Ce-1Si used for the formation of the adhesive layer (bond coat layer) of the present invention.

### <1 Preparation of Thermal Spraying Powder for Adhesive Layer>

As a method for preparing a thermal spraying powder, melting atomization method is suitably usable, and this melting atomization method is used in this working example.

As raw materials to be used, each metal raw material of high purity is used, and each raw material metal is weighed in a prescribed ratio described above and preliminarily mixed, and the resulting mixture is charged in a high frequency furnace.

After charged, the mixture is high-frequency heated and melted to obtain a homogenized molten metal. The molten metal is fallen into an atomization tower through the bottom nozzle of the high frequency furnace, and a high-pressure non-oxidizing gas mainly composed of argon gas and nitrogen gas that are inert gases is sprayed through a gas blowout nozzle annularly arranged around the bottom nozzle so as not to oxidize the molten metal to atomize the molten metal.

The atomized molten metal is cooled during freely falling in the atomization tower to form a granulated alloy, and the granulated alloy is collected in the lower part of the atomization tower. In this example, in order to homogenize the composition of the obtained granulated alloy, a treatment for melting the granulated alloy again by high frequency heating followed by granulating is executed. However, the present invention is not limited thereby.

The particle size of the granulated thermal spraying powder may be set to be easily treatable in the thermal spraying equipment to be used, and the particle size in this example is set to 50-100 µm. However, the present invention is not limited thereby, and the particle size may be properly selected.

### <2-1 Specimen>

In specimens used herein, a 74mm X 74mm × 4mm-Ni-group super alloy (Inconel 601) was used as substrate. As a coating material to be thermally sprayed, MCrAlY produced by Sulzer metco, which has been conventionally used as a bond coat, and MCrAlYCeSi of the present invention in which Ce and Si are added to the MCrAlY were used. As a top coat (TBC layer), 8wt% Yttria Stabilized Zirconia (YSZ) produced by Sulzer metco and Ceria-Yttria Stabilized Zirconia (CYSZ) produced by Sulzer metco in which 25% CeO₂ is added to the YSZ were used (Table 1).

The compositions of Inconel 601 and respective coating materials are shown in Tables 2-4. Thermal spraying is carried out under a thermal spray condition optimized so as to form, on the substrate, a 100 µm-bond coat layer by low pressure plasma spraying (LPPS) and a 300 µm-top coat by atmospheric plasma spraying (APS) followed by cutting to form specimens for respective observations.

The cutting was carried out while avoiding the end parts to form small pieces of 10mm × 10mm × 4 mm for the observation of the interface of top coat/bond coat interface by scanning electron microscope (SEM) and energy dispersion X-ray spectrometry (EDX), and bar-like specimens of 5mm × 74mm × 4mm for the four-point bending test for measuring the top coat/bond coat interface strength.

**Table 1:**

| Combinations of Bond Coat Layer and Thermal Barrier Coat Layer (TBC Layer) | | |
|---|---|---|
| No. | Bond Coat Layer (100 µm) | TBC Layer (300 µm) |
| (1) | MCrAlY | YSZ |
| (2) | MCrAlY | CYSZ |
| (3) | MCrAlYCeSi | YSZ |
| (4) | MCrAlYCeSi | CYSZ |

**Table 2:**

| Composition of Ni-Group Alloy Used | | | | | | | | | |
|---|---|---|---|---|---|---|---|---|---|
| | Ni | Cr | Fe | Al | Si | Mn | Cu | C | S |
| Inconel 601 | 59.16 | 21.94 | 16.99 | 1.34 | 0.24 | 0.23 | 0.07 | 0.03 | <0.001 |

**Table 3:**

| Chemical Composition of Bond Coat Layer | | | | | | | |
|---|---|---|---|---|---|---|---|
| Thermal Spraying Powder | Composition (wt%) | | | | | | |
| | Co | Ni | Cr | Al | Y | Ce | Si |
| MCrAlY | Bal. | 32 | 21 | 8 | 0.5 | - | - |
| MCrAlYCeSi | Bal. | 32 | 21 | 8 | 0.5 | 0.5 | 1 |

**Table 4:**

| Chemical Composition of Thermal Barrier Coating Layer (TBC Layer) | | | |
|---|---|---|---|
| Thermal Spraying Powder | Composition (wt%) | | |
| | ZrO₂ | Y₂O₃ | CeO₂ |
| YSZ | Bal. | 8 | - |
| CYSZ | Bal. | 2.5 | 25 |

### <2-2 Thermal Spray Condition>

In a moving blade actually used in a power generation gas turbine, 100 µm-MCrAlY by LPPS (low pressure plasma spraying) and 300 µm-YSZ by APS (atmospheric plasma spraying) are provided on a Ni-group alloy, respectively. Therefore, in this example, in order to simulate a coating matched to such an actual use, it is necessary to measure and observe the change in film thickness depending on the thermal spray condition and the film structure, and control them to ideal film thickness and film structure.

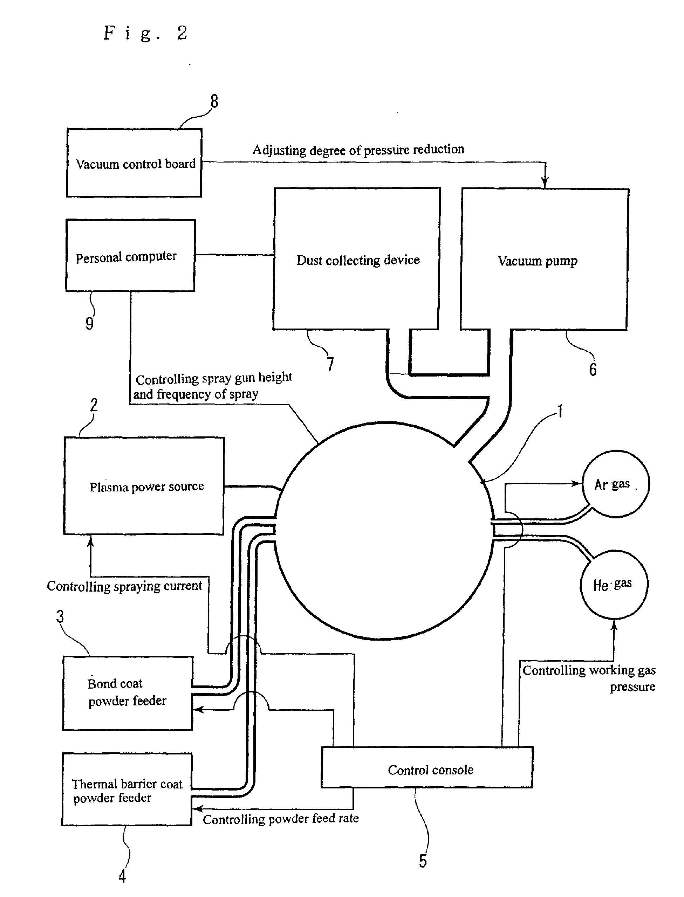

In this example, plasma spraying equipment produced by PRAXAIR shown in Fig. 2 was used as an apparatus for forming the bond coat layer and the thermal barrier coat layer (TBC layer) by thermal spraying to execute the film formation.

This plasma spraying equipment comprises a pressure reduced chamber device 1 reducible to high vacuum by a vacuum pump 6 connected thereto; and a plasma power source 2 that is a high temperature generation source for thermal spraying, a feeder 3 for supplying the thermal spraying powder for bond coat layer to the pressure reduced chamber device 1, a feeder 4 for supplying the thermal spraying powder for thermal barrier coat layer into the pressure reduced chamber device 1, a control console 5 connected to the plasma power source 2, each thermal spraying powder feeder 3, 4 and a supply regulation valve (not shown) for argon gas and helium gas to control the spraying current, the feed amount control of the thermal spraying powder, and the working gas pressure, a vacuum control board 8 connected to the vacuum pump 6 to control the vacuum state (pressure reduction degree) in the pressure reduced chamber device 1, and a personal computer 9 for adjusting the height and frequency of spraying of a spray gun arranged in the pressure reduced chamber device 1, which are arranged around the device 1, so that the low pressure plasma spraying LPPS or atmospheric plasma spraying APS can be executed to a specimen arranged in the pressure reduced chamber device 1. In the drawing, denoted at 7 is a dust collecting device for collecting the dust generated by plasma spraying.

For the spray conditions in this thermal spraying equipment, spraying current (A), spray gun height (mm), working gas pressure (psi), frequency of spray (set), and powder feed rate (rpm) are changed. The respective parameters are shown in Table 5. The thickness of the thermal barrier coat layer (TBC layer) was measured by use of a film thickness measuring instrument produced by Fisher Instrument. Since the MCrAlY that is the bond coat layer contains a magnetic metal, and the above-mentioned film thickness measuring instrument cannot be used therefor, the thickness of the substrate was measured by a micrometer, the thickness after spraying was measured, and the film thickness was determined by the difference between the both.

**Table 5:**

| Illustration of Each Parameter | |
|---|---|
| Spraying current (A) | Current for ionizing working gases. |
| Spray gun height (mm) | Distance from the tip of a spray gun to the surface of a specimen. |
| Working gas pressure (psi) | Pressures of Ar and He that are working gases. |
| Frequency of spray (set) | One set is to spray one side of a specimen throughout while moving the spray gun. |
| Powder feed rate (rpm) | The coating material to be sprayed is powder. Therefore, it is supplied from a powder feeder to the thermal spraying equipment by a carrier gas such as He. The rotating speed in the powder feeder is shown by rpm. |

### <2-3 Thermal Exposure (Aging)>

Small pieces of 10m × 10mm × 4mm for interface observation and bar-like pieces of 5mm × 74mm × 4mm for bending test which were cut while avoiding the end parts are thermally exposed (aged) at 1100°C and 1200°C in a muffle furnace produced by Yamato Scientific. The thermal exposure (aging) time is shown in Table 6.

**Table 6:**

| Thermal Exposure (Aging) Time | | | | | | | | |
|---|---|---|---|---|---|---|---|---|
| Temp. | Test Content | Thermal Exposure (Aging) Time (h) | | | | | | |
| 1100°C | SEM&EDX | 0 | 1 | 5 | 10 | 50 | 100 | 200 |
| | Bending | 0 | | | | | 100 | 200 |
| 1200°C | SEM&EDX | 0 | | | | | 100 | 200 |
| | Bending | 0 | | | | | 100 | 200 |

### <2-4 Four-Point Bending Test>

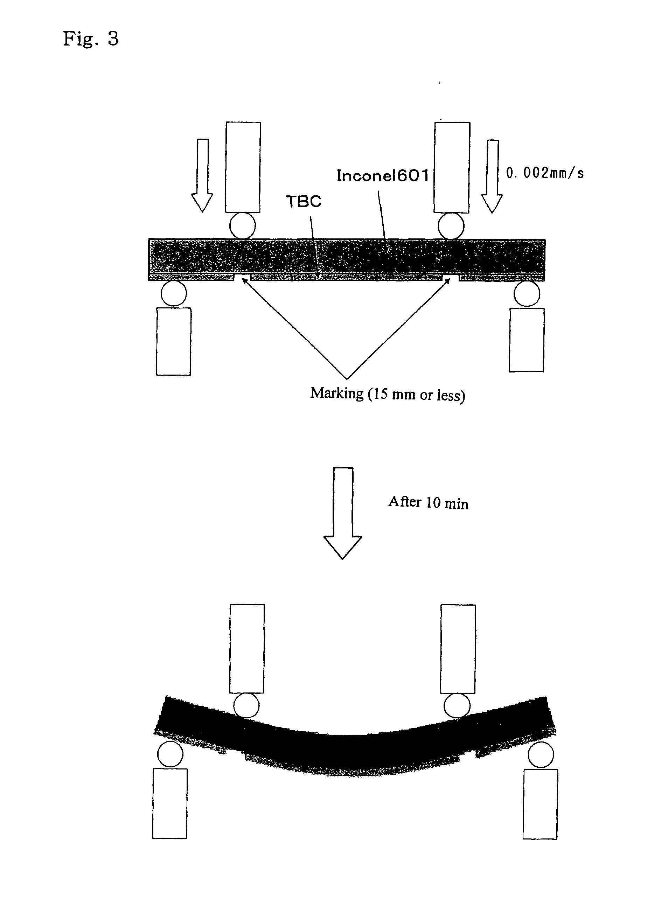

In this working example, in order to measure the interface strength of the thermal barrier coat layer (TBC layer; top coat)/the bond coat layer, four-point bending test was carried out. The specimens cut for bending test were thermally exposed at 1100°C and 1200°C for 0 hr, 100 hr, 200 hr, and then further cut to specimens of 5mm × 34mm × 4mm in order to fit them to a bending test jig, which were tested by use of a tensile compression testing machine produced by Instron. In the test, the jig was changed at a fixed rate (0.002 mm/s) to give an equal strain in a test time of 10 minutes (Fig. 3), the sections are observed by SEM, and the interface strength was evaluated according to the number of cracks and the presence of exfoliation. When exfoliation is caused by a thermal stress before the four-point bending test, or a relatively large exfoliation is observed without waiting for the test time (10 minutes) during the four-point bending test, the test was stopped, and the section at that time was observed.

### <3-1 Optimization of Thermal Spray Condition>

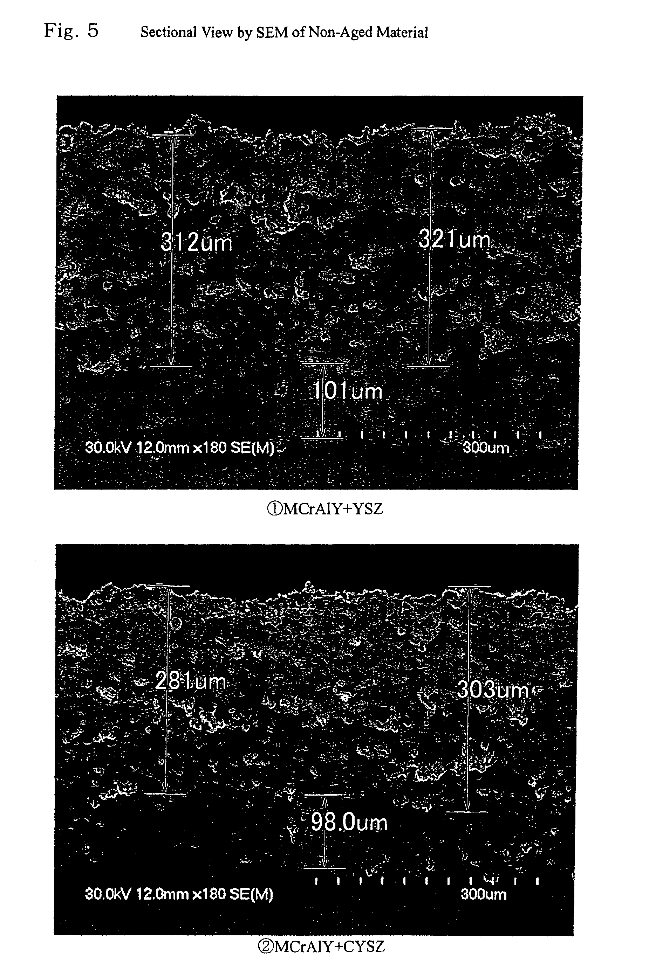

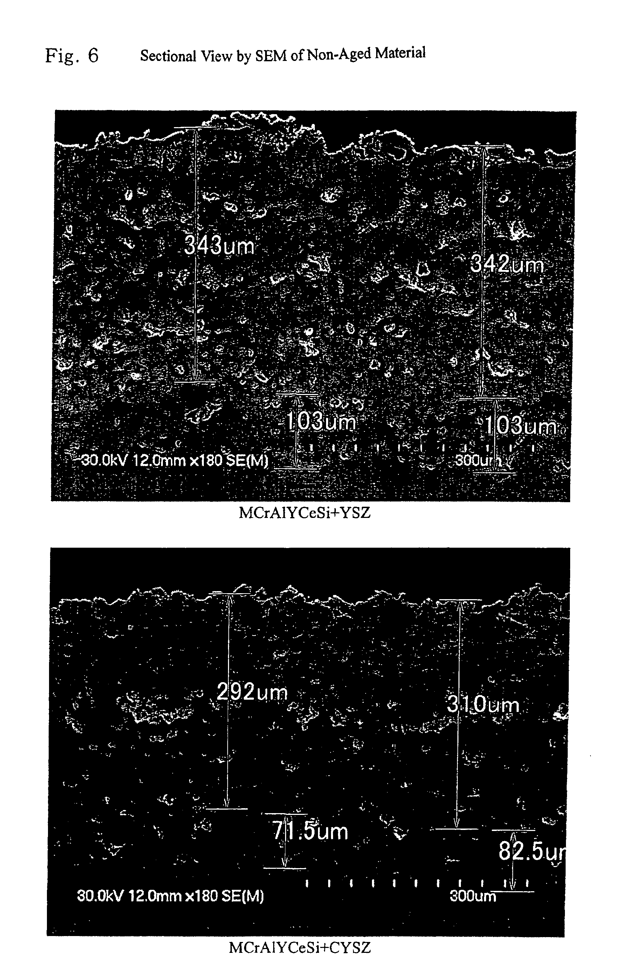

In this example, as shown in Table 1 described above, two types of CoNiCrAlYCeSi prepared in the above and conventionally used CoNiCrAlY as contrast as the bond coat layer, and conventionally used yttria stabilized zirconia YSZ and ceria-yttria stabilized zirconia CYSZ to which CeO₂ that is regarded to have an exfoliation resistance improving effect is added as the thermal barrier coat layer (TBC layer; top coat) were used to produce the specimens so as to have a bond coat layer of 100 µm by low pressure plasma spraying (LPPS) and a thermal barrier coat layer (TBC layer; top coat) of 300 µm by atmospheric spraying APS. Optimum spray conditions therefor were examined by properly changing the spraying current (A), the spray gun height (mm), the working gas pressure (Psi), the frequency of spray (set) and the powder feed rate (rpm). Each optimum spray condition is selected as Table 7. The sectional SEM images of each specimen produced under each selected condition are shown in Figs. 5 and 6.

**Table 7:**

| Optimum Spray Condition for Each Coating Material | | | | | |
|---|---|---|---|---|---|
| | Spray gun height | Spraying current | Frequency of spray | Powder feed rate | Spray gas pressure |
| MCrAlY | 140mm | 800A | 2 set | 1 rpm | 50 psi |
| MCrAlYCeSi | 140mm | 1000A | 3 set | 1 rpm | 50 psi |
| YSZ | 140mm | 900A | 4 set | 3 rpm | 50 psi |
| CYSZ | 140mm | 900A | 2 set | 3 rpm | 50psi |

### <3-2 Observation and Evaluation of Oxide Film Generation Form by Thermal Exposing Treatment>

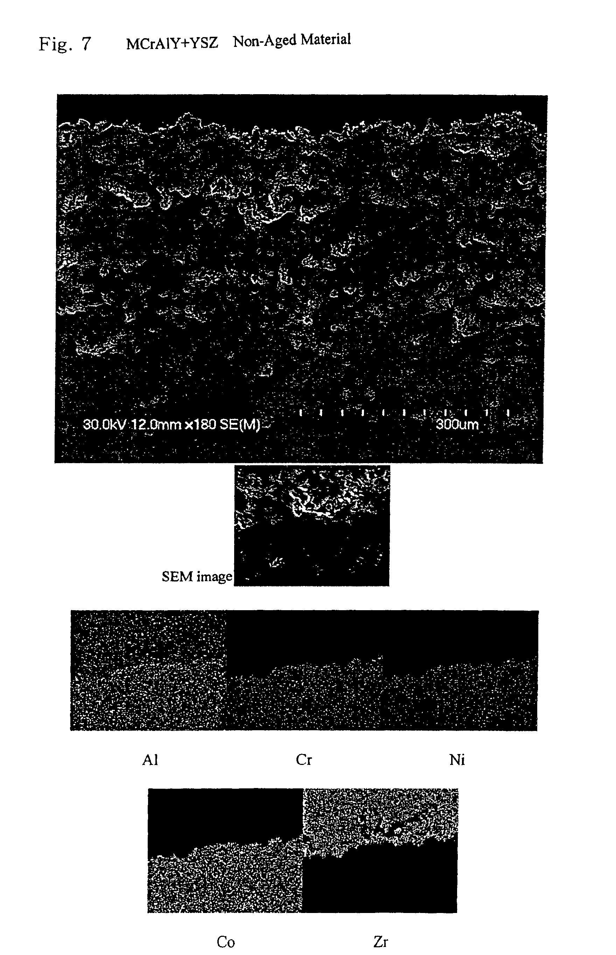

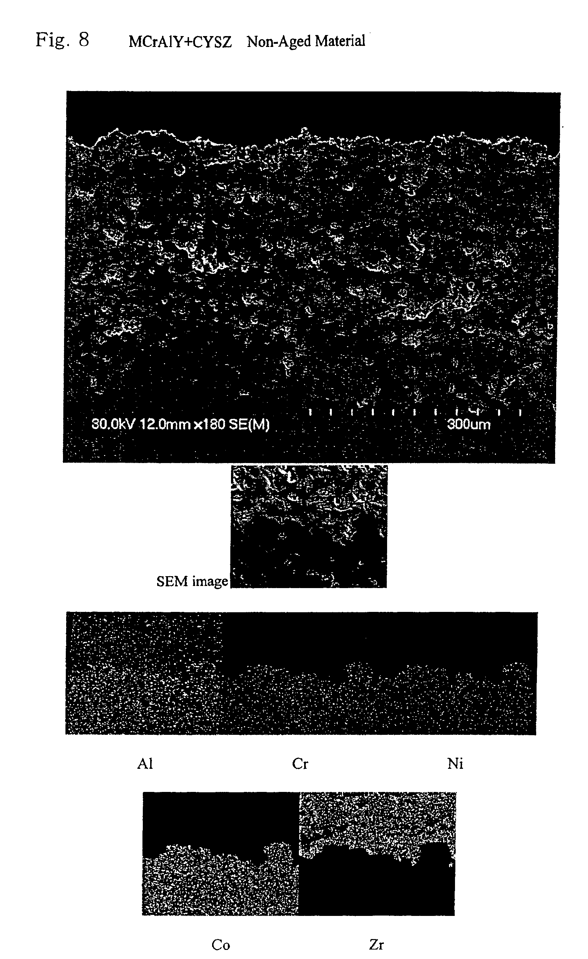

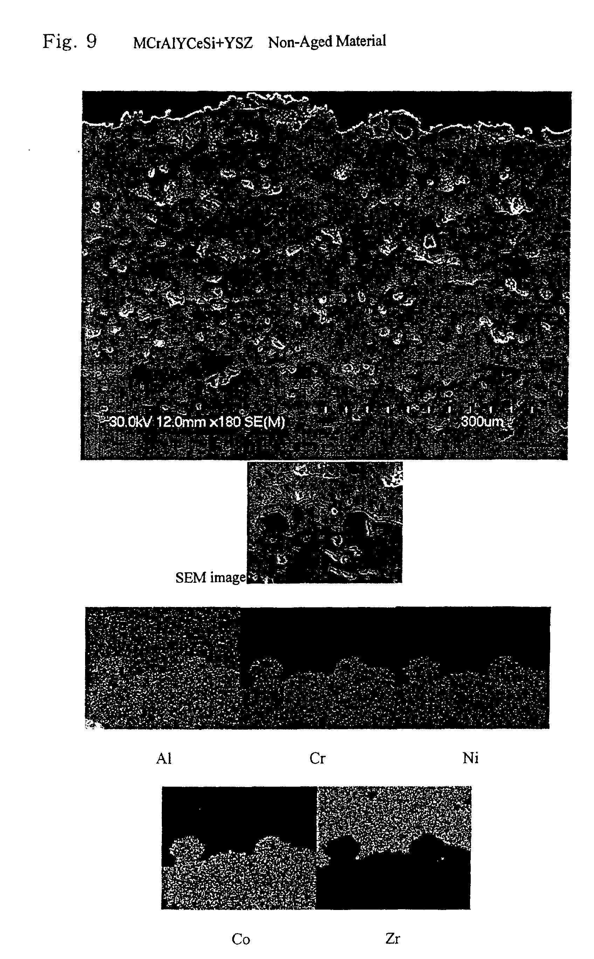

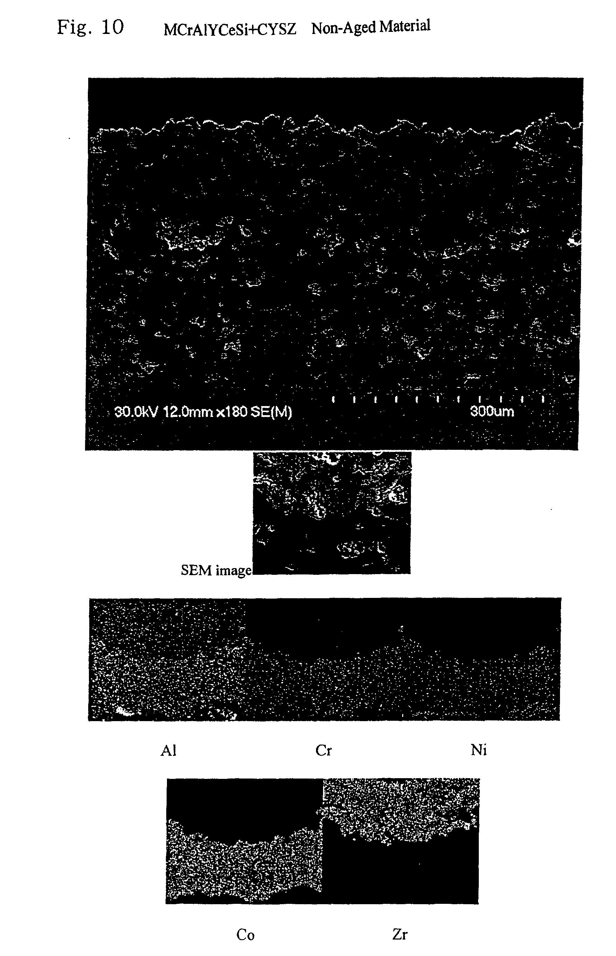

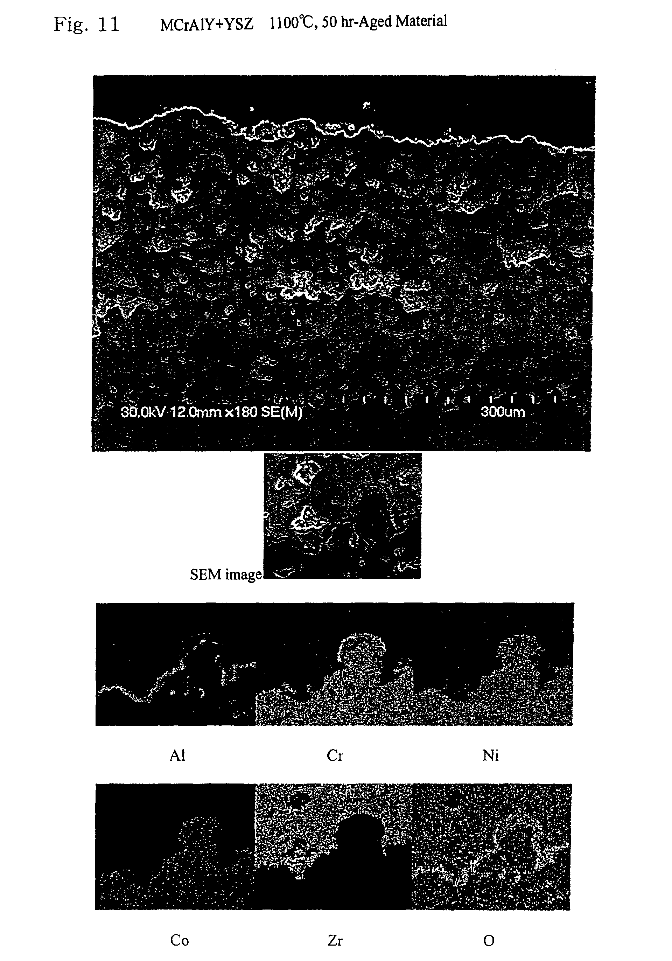

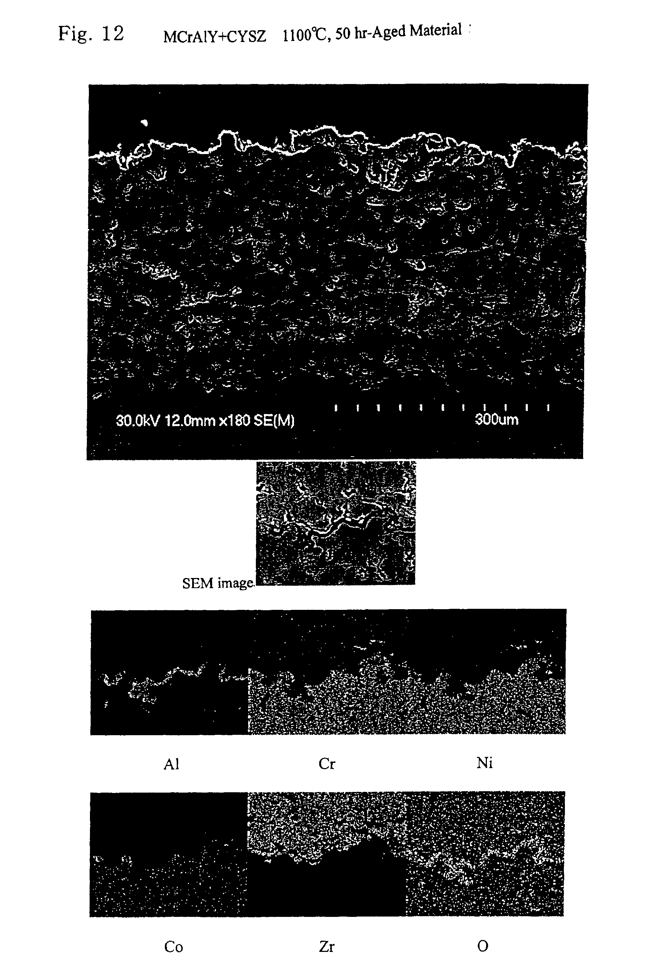

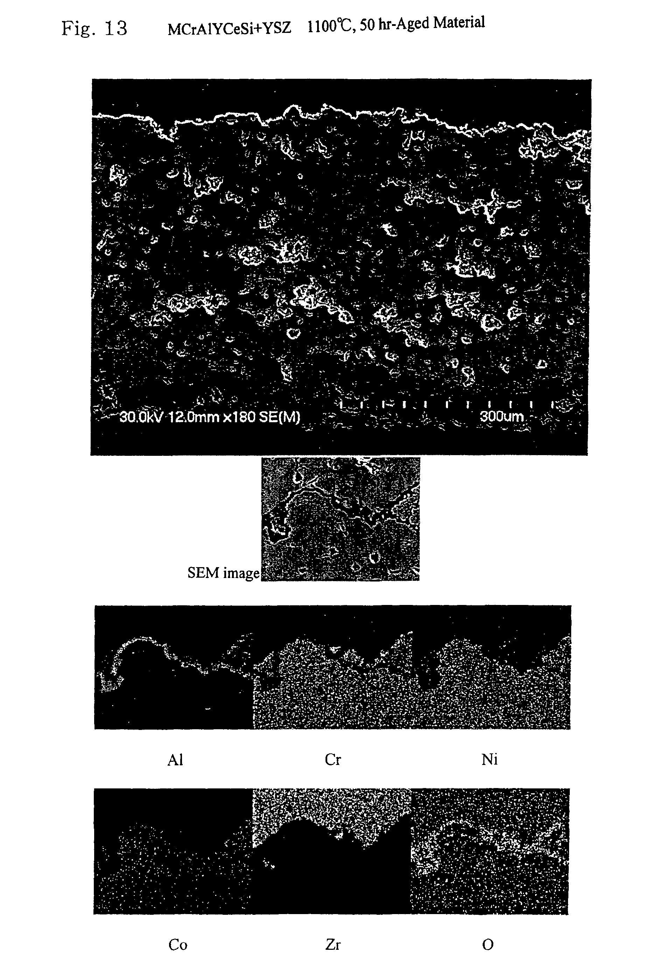

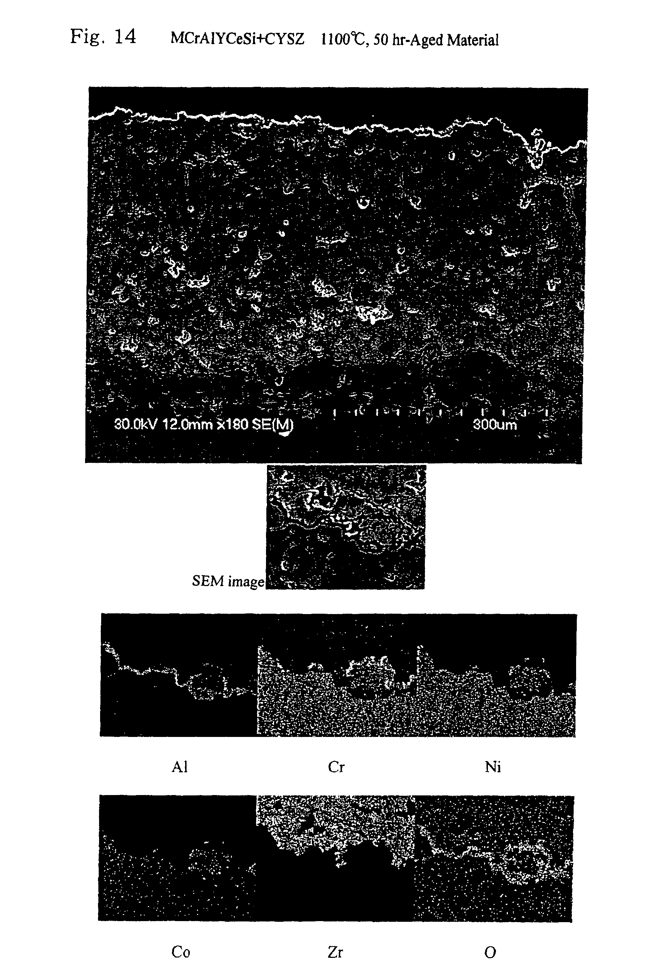

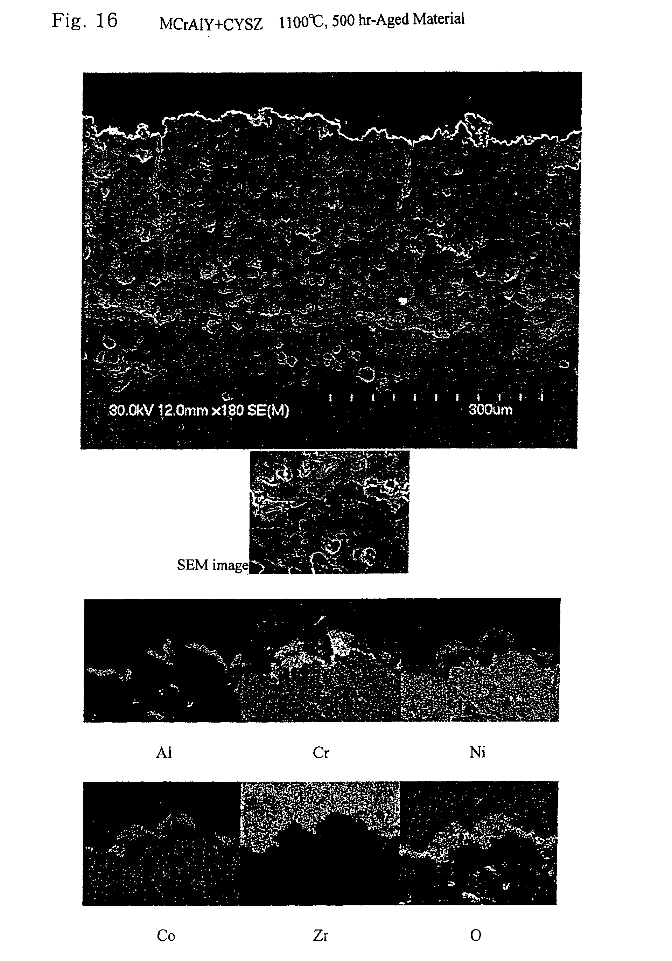

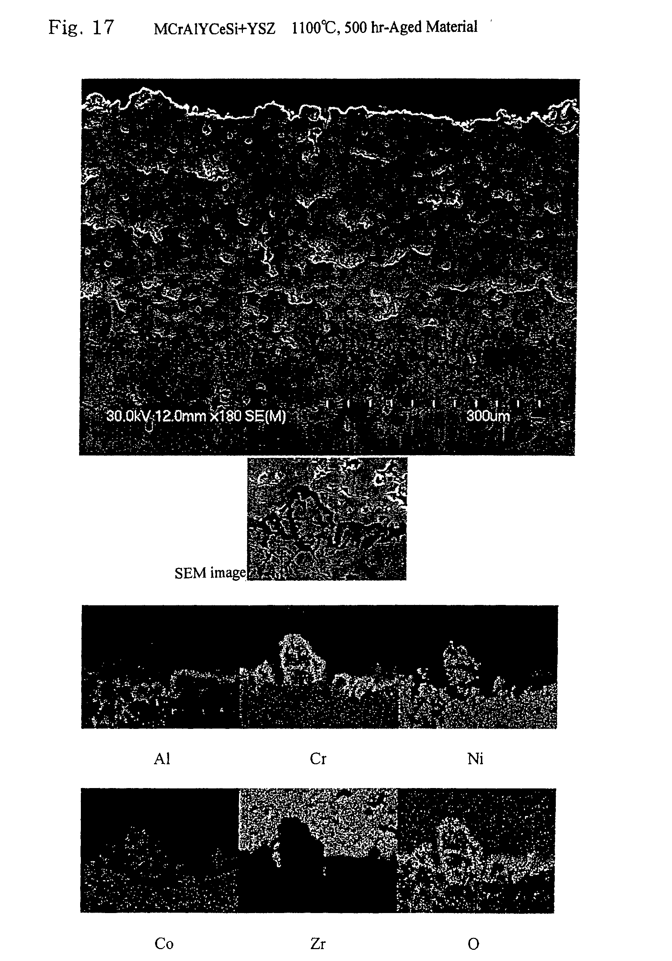

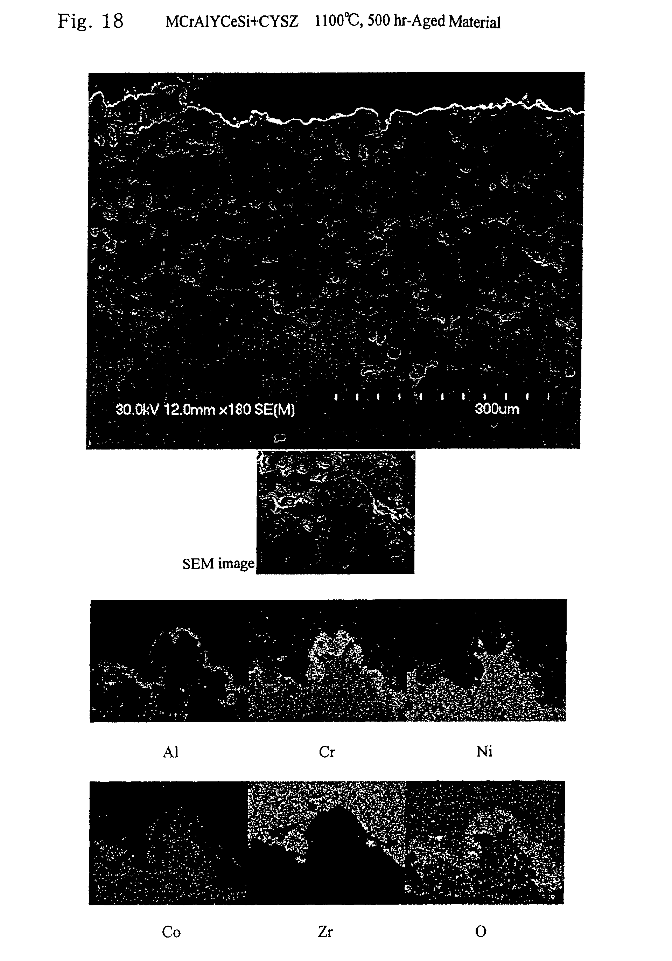

For the specimens cut for interface observation by scanning electron microscope (SEM) and energy diffusion X-ray spectrometry (EDX), non-exposed (aged) materials and exposed (aged) materials at 1000°C for 5, 10, 50, 100, 200 and 500 hrs and at 1200°C for 100 and 200 hrs are observed. Among them, particularly, the non-exposed (aged) materials and the materials exposed at 1100°C for 50 and 500 hrs are shown in Figs. 7-18.

No generation of oxides can be confirmed in the non-exposed materials, as a matter of course, because they are not heated. In those thermally exposed at 1100°C for 50 hrs, the generation of an alumina layer in the top coat (TBC layer)/bond coat layer interface and the following generation of oxides of Cr, Ni and Co can be confirmed. However, in this stage, no large difference is observed between the one using MCrAlYCeSi as bond coat layer of the present invention and the conventional one using MCrAlY as bond coat layer.

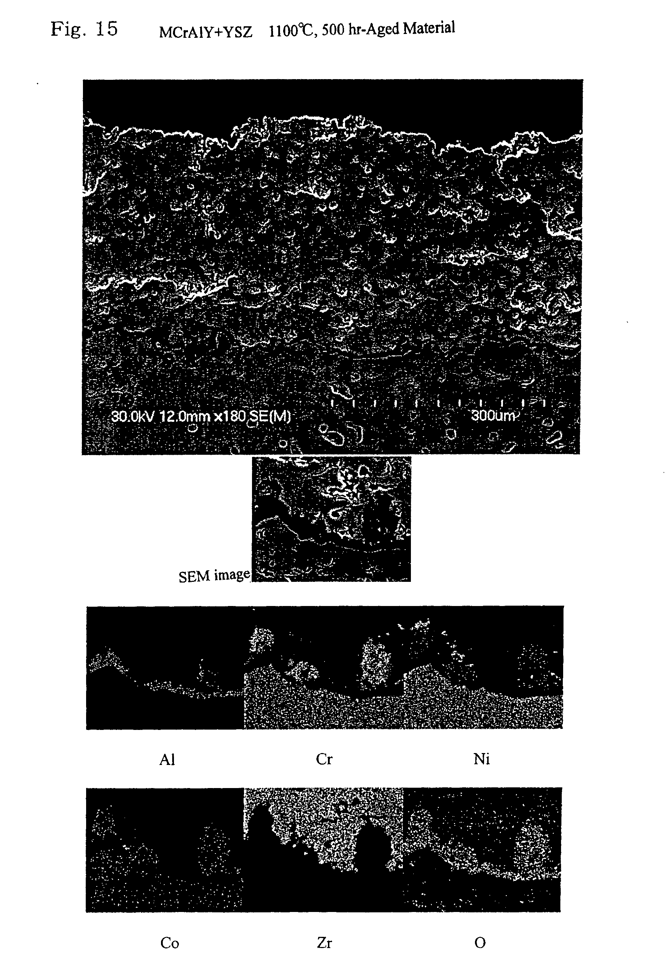

With respect to those thermally exposed at 1100°C for 500 hrs (Figs. 15-18), however, a mixed oxide layer is generated in the top coat (TBC layer) above the alumina layer in the specimen using MCrAlY as bond coat layer, while the mixed oxide layer generated in the top coat (TBC layer) is trace in the specimen using MCrAlYCeSi as bond coat. Namely, the Ce and Si added to the bond coat layer apparently suppress the generation of the mixed oxide layer which is regarded as the starting point of the exfoliation of the top coat (TBC layer) in any form, whereby the oxidation resistance and exfoliation resistance of the top coat (TBC layer) can be improved.

### <3-3 Evaluation of Exfoliation Resistance by Four-Point Bending Test>

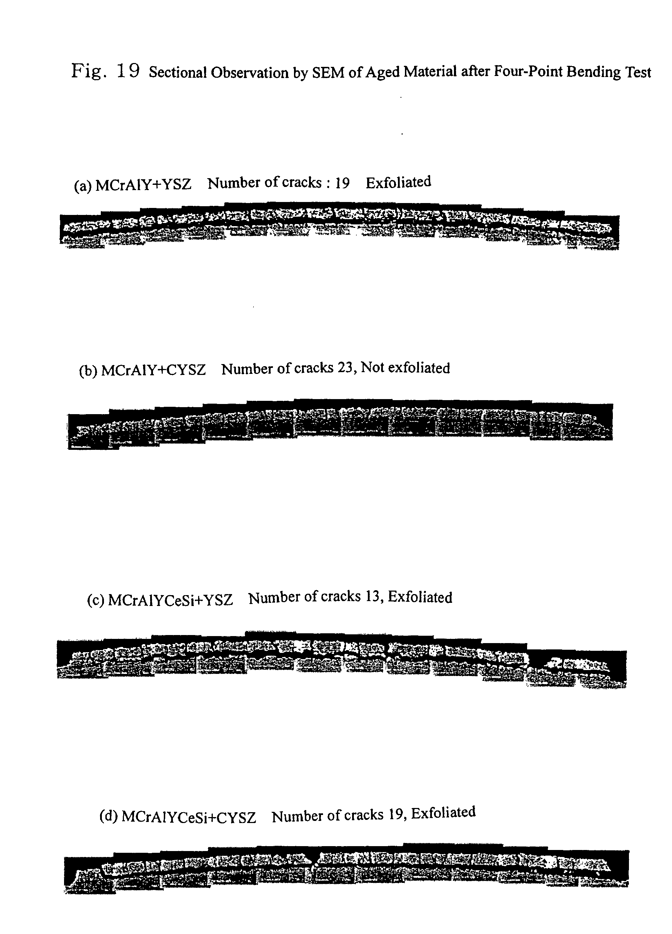

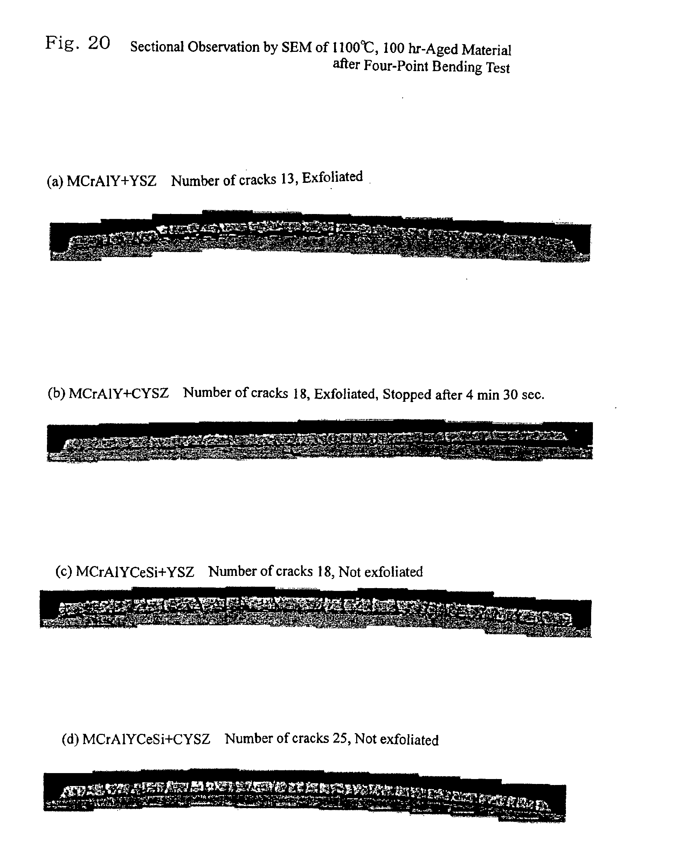

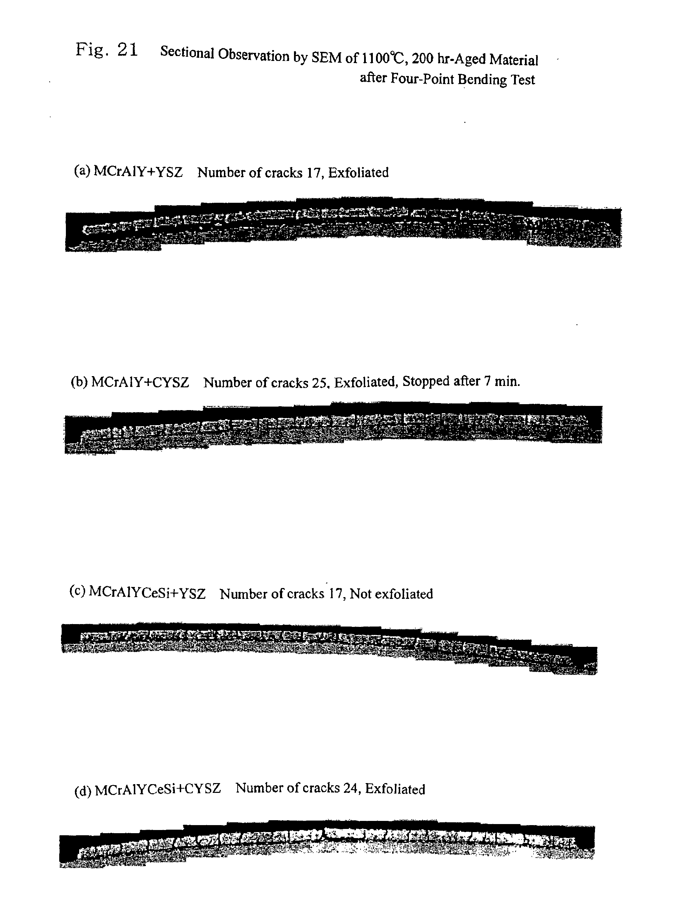

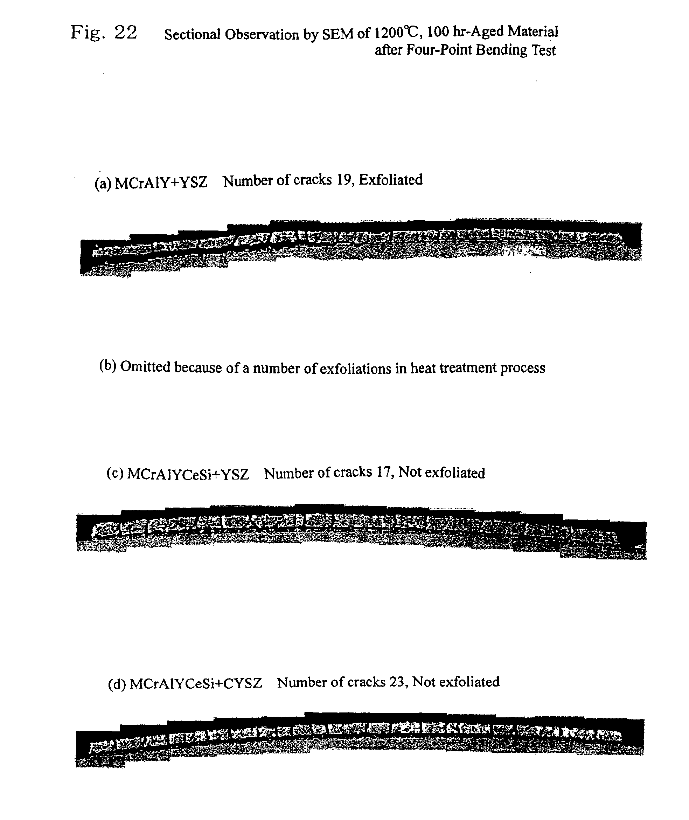

In the four-point bending test, the interface strength is evaluated according to the number of cracks and the presence of exfoliation by giving an equal strain. In Figs. 19-22, the SEM images of sections after application of a strain of ε =4.64 × 10⁻³ are shown. With respect to a specimen wherein a large exfoliation was confirmed during the test, the test was stopped. For the ones exposed (aged) at 1200°C for 200 hrs, the test was stopped since the TBC was exfoliated by thermal stress when taken out from the muffle furnace (Fig. 22).

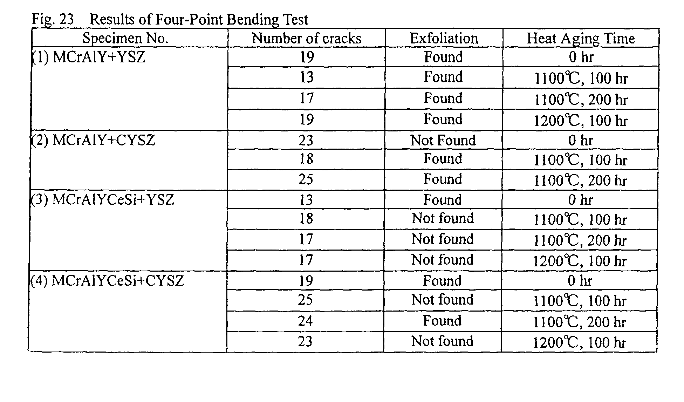

The number of cracks and the presence of exfoliation of each specimen completed in the four-point bending test are shown in Fig. 23. Compared with the specimen using MCrAlY as bond coat, the specimen using MCrAlYCeSi is difficult to exfoliate. This shows that the specimen using MCrAlYCeSi as bond coat layer is increased also in interface strength. Only for those aged at 1100°C for 100 hrs, the number of longitudinal cracks tends to be larger in the specimen using MCrAlYCeSi than in the specimen using MCrAlY. This attributes to that the release of strain energy more preferentially acts on the generation of longitudinal cracks than on the exfoliation of interface. This is also considered a phenomenon resulted from the increase in interface strength. In the specimen using CYSZ containing CeO₂ added to YSZ that has been regarded to be effective for exfoliation resistance as the thermal barrier coat layer, the number of cracks tends to increase. However, the exfoliation is caused similarly to the conventional YSZ when the exposing time is extended although the improvement in exfoliation resistance is observed in a range having a short thermal exposure, and this specimen is insufficient for exfoliation resistance. On the contrary, for the specimen using MCrAlYCeSi as bond coat layer of the present invention, the exfoliation resistance is apparently significantly improved in both YSZ and CYSZ series.

The cause of this improvement in exfoliation resistance is resulted from that, by adding Ce and Si to the MCrAlY conventionally used as bond coat layer, the mixed oxide layer (TGO) is hardly generated in the thermal barrier coat layer (TBC layer), compared with those not containing them. In other words, when an element capable of inhibiting the growth of the mixed oxide layer (TGO) is added, the exfoliation resistance of the thermal barrier coat layer (TBC layer) can be improved.

In this test, also, the result shown in Fig. 23 shows that the interface strength of the specimen having Ce and Si added to MCrAlY is apparently enhanced. This attributes to that the exfoliation strength was relatively increased because the generation of the mixed oxide layer is suppressed in the specimen using MCrAlY with Ce and Si added thereto to suppress the reduction in interface strength by such a mixed oxide layer.

Having described the present invention according to the drawings, it should be understood that the present invention is not limited to the embodiments described above, and changes and additions that fall in the range not departing from the sprit and scope of the present invention as hereinafter claimed are included in the present invention.

For example, in the above-mentioned working example, both Ce and Si are added to MCrAlY that is the bond coat layer. This is preferable because high exfoliation resistance (the effect of suppressing the growth of the mixed oxide layer) can be obtained by the addition of the both, compared with the addition of either one. However, the present invention is not limited thereby, and only one of them may be added.

Further, the addition ratio of Ce to Si is set to 1:2 in the above example. The relatively high ratio of Si is preferable because Si is extremely inexpensive, compared with Ce, and the resulting thermal spraying powder or member coated with thermal barrier coating film can be produced at a lower cost. However, the present invention is not limited thereby, and the ratios of Ce and Si may be properly selected.

The addition amounts of Ce and Si to the MCrAlY may be properly selected without being limited by the above example.

In the above example, Ce and Si are used as additive elements. However, the present invention is never limited thereby, and any ones that can inhibit the growth of the mixed oxide layer (TGO) and have no serious influence on the heat resistance or corrosion resistance performance of MCrAIX may be used as the additive elements.

Further, Ce and Si are added in the above example. However, the present invention is not limited thereby, and other elements, for example, platinum (Pt) and the like may be optionally added in addition to these two kinds.

### Description of Reference Numerals

- 1: Reduced-pressure chamber device
- 2: Plasma power source
- 3: Feeder (bond coat layer)
- 4: Feeder (thermal barrier coat layer; TBC layer)
- 5: Control console
- 6: Vacuum pump
- 7: Dust collecting device
- 8: Vacuum control board
- 9: Personal computer

## Claims

1. A member coated with thermal barrier coating film having a metal substrate, the surface of which is covered with an adhesive layer (bond coat layer) composed of a heat resisting alloy and a thermal barrier film layer (thermal barrier coating layer) composed of a heat resisting ceramic and formed on the adhesive layer (bond coat layer), **characterized in that** the adhesive layer (bond coat layer) comprises an MCrAlX alloy (wherein M is at least one metal selected from among Fe, Ni and Co, and X is at least one metal selected from among Y, Hf, Ta, Cs, Pt, Zr, La and Th), and an element capable of inhibiting the growth of an oxide layer (TGO) which is grown between the adhesive layer (bond coat layer) and the thermal barrier film layer (thermal barrier coating layer) by the exposure to a high temperature is added to the adhesive layer.

2. The member coated with thermal barrier coating film according to claim 1 wherein the added element is at least one of Ce and Si.

3. The member coated with thermal barrier coating film according to claim 2 wherein the adhesive layer (bond coat layer) contains both Ce and Si.

4. The member coated with thermal barrier coating film according to claim 3 wherein the adhesive layer (bond coat layer) has a composition of 37Co-32Ni-21Cr-8Al-0.5Y-0.5Ce-1Si alloy (wherein the numerical value in the front of each atomic symbol shows wt% of each element).

5. A thermal spraying powder used for the formation of an adhesive layer (bond coat layer) of a member coated with thermal barrier coating film having a metal substrate, the surface of which is covered with an adhesive layer (bond coat layer) composed of a heat resisting alloy having a composition MCrAlX (wherein M is at least one metal selected from among Fe, Ni and Co, and X is at least one metal selected from among Y, Hf, Ta, Cs, Pt, Zr, La and Th) and a thermal barrier film layer (thermal barrier coating layer) composed of a heat resisting ceramic formed on the adhesive layer (bond coat layer), **characterized in that** an element capable of inhibiting the growth of an oxide layer grown between the adhesive layer (bond coat layer) and the thermal barrier film layer (thermal barrier coating layer) by the exposure to a high temperature is added to the composition of the adhesive layer (bond coat layer).

6. The thermal spraying powder according to claim 5 wherein the added element is at least one of Ce and Si.

7. The thermal spraying powder according to claim 6 wherein both Ce and Si are contained in the composition.

8. The thermal spraying powder according to claim 7 wherein the composition is a 37Co-32Ni-21Cr-8Al-0.5Y-0.5Ce-1Si alloy (wherein the numerical value in the front of each atomic symbol shows wt% of each element).
